# EUROPEAN PATENT SPECIFICATION

(11) **EP 2 717 723 B1**
(45) Date of publication and mention of the grant of the patent: **06.12.2017**
(21) Application number: 12727056.9
(22) Date of filing: 06.06.2012
(51) Int. Cl.: A23P 10/25, A23P 30/20, A23L 29/25, A23L 7/126, A23L 7/139, A23L 11/00, A23L 33/185

(54) **METHOD OF FORMING READY-TO-EAT CEREAL FLAKES CONTAINING LEGUMES**
VERFAHREN ZUR BILDUNG VON ESSFERTIGEN GETREIDEFLOCKEN MIT HÜLSENFRÜCHTEN
PROCEDE DE FORMATION DE FLOCONS DE CÉRÉALE PRÊTS À ÊTRE CONSOMMÉS CONTENANT DES LÉGUMINEUSES

(30) Priority: 10.06.2011 US 201161495482 P; 05.06.2012 US 201213488715
(43) Date of publication of application: 16.04.2014
(73) Proprietor: Kellogg Company, Battle Creek, MI 49016-3599 (US)
(72) Inventor: GANDHI, Kalpesh, Battle Creek, MI 49014 (US); WENK, Roger, S., Battle Creek, MI 49015 (US)
(74) Representative: Monzón de la Flor, Luis Miguel
(86) International application number: PCT/US2012/040984
(87) International publication number: WO 2012/170458

(56) References cited:
- EP-A1- 0 812 545
- WO-A1-2010/124922
- GB-A- 663 232
- US-A1- 2007 087 107
- US-A1- 2008 248 179
- US-B1- 6 303 177
- US-B2- 7 235 276
- LINDA MILO OHR: 'Focusing on Gum Arabic' PREPARED FOODS NUTRA SOLUTIONS, [Online] 09 December 2003, pages 1 - 3, XP055241731 Retrieved from the Internet: <URL:http://www.preparedfoods.com/articles/ 106138-focusing-on-gum-arabic> [retrieved on 2016-01-15]

## Description

### RELATED APPLICATIONS

### TECHNICAL FIELD

The present invention relates to a method of forming ready-to-eat food products containing legumes, and more particularly to flaked ready-to-eat breakfast cereals containing legumes.

### BACKGROUND OF THE INVENTION

Legumes, also known as pulses, have excellent nutritional qualities, including significant amounts of protein and dietary fiber, with very low amounts of fat, calories, sugar, and cholesterol. For example, a half cup serving of black beans provides 7 grams of protein and 6 grams of dietary fiber, with only 1 gram of fat, 140 calories, 0 grams of sugar, and 0 grams of cholesterol. Consumers wanting to reduce their blood pressure and improve their overall health are encouraged to replace red meat and other animal-based sources of protein in their diet with legumes and legume-based sources of protein. The major legumes include beans, peas, lentils, and peanuts. Legumes contain vitamins and antioxidants that may prevent various diseases, such as heart disease and cancer.

Due to the exceptional nutritional and health benefits, consumers want more legumes in their diet. Thus, a variety of ready-to-eat food products including legumes and legume-based sources of protein have been developed. U.S. Patent No. 7,235,276 to Allen et al. discloses a puffed food dough including soy protein isolate or legume protein isolate; grains, such as wheat and rice; and a total protein content of 50 to 75%. The Allen patent teaches the puffed food dough could be used to form ready-to-eat foods, such as ready- to-eat cereal.

U.S. Patent Application Publication No. 2007/0087107 to Borders et al. discloses food products containing legumes from sources, such as beans, peas, and lentils, preferably navy beans and pinto beans, and in a variety of forms, such as legume powder or flour. The legumes comprise from 10 to 100% by weight of the food product. Borders teaches the food product can take a variety of forms, such as an extrusion puffed cereal piece or cereal crisp product.

in the state of the art is known document US2008/248179 which discloses a method for making a direct expanded snack piece shaped like a peanut. Ingredients comprising peanut flour, ground corn product, rice flour and oat flour are introduced into an extruder. The ingredients are hydrated and extruded through an orifice adapted to produce a puffed snack piece shaped like a peanut and cut into puffed snacks. The puffed snacks are dried and seasoned."

Another document related with the object of the invention is the patent US 6303177 B1 which discloses a breakfast cereal for human consumption that contains at least one cereal grain and a soy material selected from soy flour, soy grits, soy flakes, a comminuted whole soybean material, or combinations thereof. The soy material contains at most 20 µmol/g raffinose and 35 µmol/g stachyose, and at least 200 µmol/g sucrose. D2 also discloses a process for producing such a breakfast cereal in which at least one cereal grain and a soy material selected from a soy flour, soy grits, soy flakes, a comminuted whole soybean material, or combinations thereof are blended, cooked to form a cereal dough, and a ready-to-eat cereal is formed from the cereal dough. The soy material contains at most 20 µmol/g raffinose and 35 µmol/g stachyose, and at least 200 µmol/g sucrose. A process of reducing coronary heart disease risk in a human is also disclosed in which a cereal containing a soy material containing at most 20 µmol/g raffinose and 35 µmol/g stachyose, and at least 200 µmol/g sucrose is administered to a human."

However, food products of the prior art including a significant amount of legumes are difficult to form into ready-to-eat cereal flakes. This is because legumes do not functionally contribute to physical properties, such as elasticity and cohesiveness, as do the grains of conventional ready-to-eat cereals. The prior art does not disclose an example or otherwise teach one of skill in the art of how to form ready-to-eat cereal flakes including a significant amount of legumes which also have a structural integrity, texture, size, shape, and overall appearance similar to conventional ready-to-eat cereal flakes.

### SUMMARY OF THE INVENTION

The invention provides a method of forming ready-to-eat cereal flakes including grains, protein isolate and legumes having a desirable taste and a structural integrity similar to conventional ready-to-eat cereal flakes. The method is as defined in the appended claims.

The flakes obtained by the claimed method may have a can weight of 538.64 g to 623,69 g (19 to 22 ounces) and a moisture content of 1 to 5%, based on the total weight of the flakes. The flakes include grain in an amount of 18 to 66 weight percent (wt%), legumes in an amount of 10 to 50 wt%, at least one processing aid in an amount of 3 to 9 wt%, and at least one protein isolate in an amount of from 6 to 13 wt %, all based on the total weight of the flakes.

The invention provides a method of forming a flaked ready-to-eat cereal comprising the steps of: forming a food mass by combining in a cooker grain and protein isolate and cooking the food mass in the cooker at a pressure of 137895.15 to 172368.93 Pascals (20 to 25 pounds per square inch); adding to the food mass water and gum acacia as processing aid and cooking at 137895.15 to 172368.93 Pascals (20 to 25 psi) until a moisture content of the food mass is from 30 to 36 weight percent, wherein the gum acacia is present in an amount of at least 3 wt%; removing the cooked food mass from the cooker and then cooling the cooked food mass and drying it to a moisture content of from 24 to 33 weight percent; milling the cooked food mass through a screen having openings of from 0.3175 to 1.59 (1/8 to 5/8 of an inch) in diameter and then further drying the milled food mass to a moisture content of from 20 to 26 weight percent; combining the milled food mass with legumes and further water in a cold pellet former to form a combined mass and cold forming said combined mass into non-expanded pellets while maintaining said combined mass at a temperature of 31.78 °C (100[deg.] F) or less; drying the pellets to a moisture content of from 14 to 21 weight percent and then flaking them at a temperature of from 43.33°C to 65.56°C (110 to 150[deg.] F); and drying and toasting the flakes to a final moisture content of from 1 to 5 weight percent.

The ready-to-eat cereal flakes disclosed herein provide the nutritional and health benefits typically associated with legumes, such as significant amounts of protein and fiber, with low amounts of fat, calories, and cholesterol. The cereal flakes can provide at least 7 grams of protein and at least 6 grams of fiber per 52 gram serving. Unlike some ready-to-eat food products containing legumes, the ready-to-eat cereal flakes have a desirable taste, rather than a bitter or overwhelming bean-like taste. The cereal flakes also have a structural integrity, processability, texture, size, shape, and overall appearance similar to conventional grain-based ready-to-eat cereal flakes. The structural integrity is an unexpected result given the significant amount of legumes in the cereal flakes because legumes do not functionally contribute to physical properties, such as elasticity and cohesiveness, as do the grains that are typically used to prepare conventional ready-to-eat cereal flakes.

### BRIEF DESCRIPTION OF THE DRAWINGS

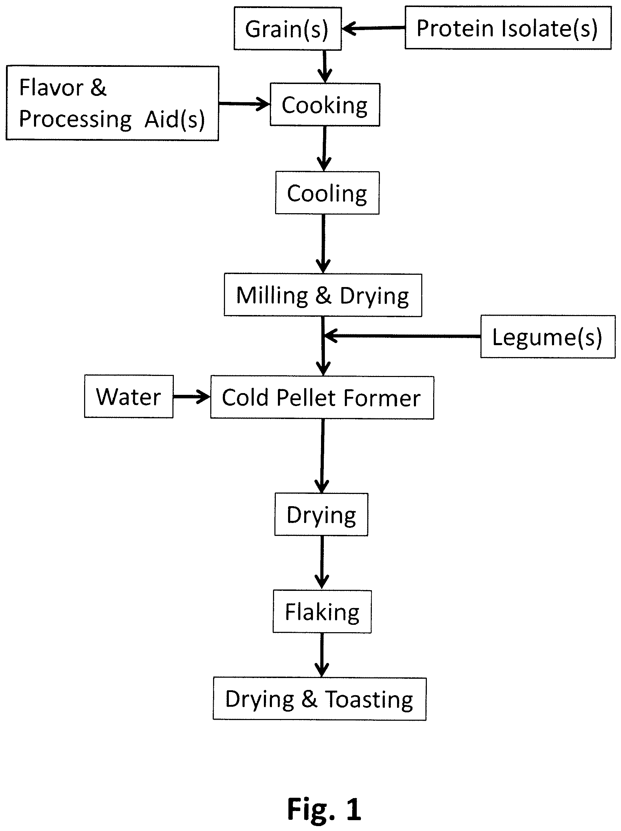

Figure 1 is a flow chart of a method of forming the ready-to-eat cereal flakes according to a preferred embodiment of the invention.

### DETAILED DESCRIPTION OF THE INVENTION

The invention provides a method of producing ready-to-eat cereal flakes including legumes. The cereal flakes also include protein isolate, grains, flavor additives, and gum acacia. The cereal flakes can include other ingredients typically used in ready-to-eat breakfast cereals, such as supplements and preservatives. The cereal flakes provide at least 7 grams of protein and at least 6 grams of fiber, but typically 9 grams of protein and 8 grams of fiber, per 52 gram serving.

The finished ready-to-eat cereal flakes have a structural integrity, texture, size, shape, and overall appearance similar to conventional ready-to-eat cereal flakes. The finished cereal flakes typically have a moisture content of 1 to 5 wt%, preferably 2 to 4 wt% based on the total flake weight. The finished cereal flakes also preferably have a "can weight" of 538.64 g to 623,69 g (19 to 22 ounces). The can weight is the weight of the cereal flakes filling a 3,785.41 cm³ (231 cubic inch volume). The can weight is measured by filling a container or can having a volume of 3,785.41 cm³ (231 cubic inches) with the cereal flakes, and then measuring the total weight of the cereal flakes in the container. The flakes are not compressed prior to weighing.

The ready-to-eat cereal flakes disclosed herein also have a bowl life similar to conventional ready-to-eat cereal flakes. The ready-to-eat cereal flakes maintain a desirable crunchiness for over two minutes when disposed in a bowl of milk.

The terms "legume" or "legumes" refer to the seeds of grain legumes and products derived from them, such as flours, grits, particulates, powders, and other seed- based products. Unless otherwise stated, the amount of each ingredient of the cereal flakes is the amount before any cooking or processing of the ingredients. Unless otherwise stated, the amount of each ingredient in the flakes is provided in weight percent (wt%), which means the weight of the ingredient relative to the total weight of all the ingredients of the cereal flakes.

### Legumes

The cereal flakes include at least one legume with the total legumes in an amount of at least 10 wt%, preferably 10 to 50 wt%, and more preferably 15 to 22 wt%, based on the total weight of the cereal flakes. The legumes are preferably cracked black beans or black bean grits, but can include any type of legume, pea, lentil, chickpea, bean, or any combination thereof, except vanilla beans and coffee beans. The legumes can be whole or in the form of grits, powder, flour, or particulates. In one embodiment, the legumes are black beans provided as precooked, dehydrated particulates. In another embodiment, the legumes are black bean grits. The whole legumes, legume grits, or legume particulates may be discemable in the finished ready-to-eat cereal flakes, whereas the legume powders and flours are typically not discemable.

### Protein Isolate

The cereal flakes also include at least one protein isolate with the total protein isolates in an amount of at least 6 wt%, preferably 6 to 13 wt%, and more preferably 8 to 1 1 wt%, based on the total weight of the cereal flakes. The protein isolate is preferably pea protein isolate, but can include soy protein isolate, gluten protein isolate, milk protein isolate, or any combination thereof. The pea protein isolate is a natural, healthy, and environmentally friendly product. The pea protein isolate is made using water extraction, rather than a traditional hexane extraction process having harmful environmental effects. The pea protein isolate includes high levels of essential amino acids, such as cysteine, methionine, histidine, isoleucine, leucine, valine, lysine, phenylalanine, tyrosine, threonine, and tryptophan.

### Grains

The cereal flakes also include at least one grain with the total amount of grain present in an amount of 18 to 66 wt%, preferably 35 to 66 wt%, more preferably 42 to 63 wt%, and even more preferably 45 to 57 wt%, based on the total weight of the cereal flakes. The grains are preferably a blend of whole grains, rice, brown rice, and wheat, but can include oats, barley, corn, millet, buckwheat, sorghum, triticale, or any combination thereof. The grains can be provided in a variety of forms, such as whole, flour, powder, meal, grits, flakes, bran, and germ. In one embodiment, the cereal flakes include a combination of whole grains, broken whole grain brown rice, and cracked hard red winter wheat.

The cereal flakes typically include the whole grains in an amount of at least 2 wt%, preferably 2 to 8 wt%, and more preferably 4 to 6 wt%, based on the total weight of the cereal flakes. In one embodiment, the whole grains of the cereal flakes include a whole grain blend comprising whole oat groats, whole long grain brown rice, whole hard red winter wheat, whole rye, whole triticale, whole hulled barley, and buckwheat groats.

The cereal flakes typically include the rice in an amount of at least 10 wt%, preferably 10 to 25 wt%, and more preferably 18 to 23 wt%, based on the total weight of the cereal flakes. In one embodiment, the rice is broken whole medium grain brown rice.

The cereal flakes also typically include the wheat in an amount of at least 22 wt%, preferably 22 to 34 wt%, and more preferably 26 to 30 wt%. In one embodiment, the wheat is cracked hard red winter wheat. In another embodiment, the cereal flakes include wheat flour and wheat bran.

### Processing Aids

The cereal flakes include at least one processing aid for improving processability. The processing aids are present in an amount of at least 3 wt%, preferably 3 to 9 wt%, and more preferably 5 to 7 wt%, based on the total weight of the cereal flakes. The cereal flakes include gum acacia as a processing aid. The gum acacia is present in an amount of at least 3 wt%, preferably 3 to 9 wt%, and more preferably 5 to 7 wt%. The gum acacia is used to prevent the cereal flakes from breaking apart during processing and so that the cereal flakes maintain structural integrity after processing.

### Flavor Additives

The cereal flakes include flavor additives to improve taste. The flavor additives are typically present in an amount of at least 6.5 wt%, preferably 6.5 to 17.5 wt%, and more preferably 9.5 to 14.5 wt%, based on the total weight of the cereal flakes.

The flavor additives typically include ingredients having a high sugar content, such as syrups, to enhance sweetness of the cereal flakes. In one embodiment, the cereal flakes include brown rice syrup in an amount of at least 2 wt%, preferably 2 to 6 wt%, and more preferably 3 to 5 wt%. The cereal flakes preferably include evaporated cane juice crystals in an amount of at least 4 wt%, and preferably 4 to 10.5 wt%.

The flavor additives can also include salt or spices. In one embodiment, the cereal flakes include salt, such as a hi-grade evaporated salt, in an amount of at least 0.1 wt%, preferably 0.1 to 3 wt%, and more preferably 0.5 to 2 wt%.

### Other Ingredients

The cereal flakes can also include other ingredients typically found in ready-to-eat cereals, such as supplements and preservatives. The other ingredients can be added to improve appearance, texture, or nutrition content of the cereal flakes. A coating can be applied to the finished cereal flakes to enhance the appearance of the ready-to eat cereal flakes, such as an oil-based coating used to coat conventional ready-to-eat cereal flakes. In one embodiment, the coating includes at least one sweetener to enhance sweetness of the cereal flakes. For example, the coating can be a sugar-based coating used to coat conventional ready-to-eat cereal flakes.

### Method of Forming the Cereal Flakes

The method of forming the cereal flakes first includes providing pellets including legumes and grains, and then forming the pellets into flakes. A flow diagram of a preferred method of forming the cereal flakes is shown in Figure 1 , wherein the pellets are formed using a cold pellet forming process.

As shown in Figure 1, the method first includes cooking the grains and protein isolate in a pressure cooker, such as a commercial rotary steam pressure cooker. The grains and protein isolate are cooked for 60 minutes at a steam pressure of 137895.15 to 172368.93 Pascals (20 to 25 pounds per square inch). The cooking temperature will depend on the steam pressure and is determined by steam tables, but is typically 126.11°C to 130.56°C (259 to 267[deg.] F). Next, the flavor additives, processing aids, and water are added to the pressure cooker and cooked along with the grains and protein isolate. The mixture is cooked at a steam pressure of 137895.15 to 172368.93 Pascals (20 to 25 pounds per square inch) and to a moisture content of 30 to 36 wt%, preferably 32 to 34 wt%, based on the total weight of the cooked mixture. The cooked mixture is then removed from the pressure cooker, cooled, and dried in a conventional fluidized bed type dryer operating at about ambient temperature to a moisture content of 26 to 32 wt%, preferably 28 to 30 wt%.

The method next includes milling the dried mixture through a 0.3175 to 1.5875 (1/8 to 5/8 inch) mesh screen to break the lumps and create a free flowing cooked mixture. The milled mixture is then dried to a moisture content of 20 to 26 wt%, preferably 22 to 24 wt%. The milled mixture is typically dried in the conventional fluidized bed type dryer, for example operating at a temperature of 104.44°C (220[deg.] F) for 10 to 12 minutes.

The milled mixture is next combined with the legumes and additional water and the combined mass is cold formed into a plurality of non-expanded pellets. Cold forming extrusion processes used to form conventional ready-to-eat breakfast cereals can be used to form the pellets. The cold forming process typically includes adding the cooked mixture at a flow rate of 2.72 to 4.54 kg per minute (6 to 10 pounds per minute) to an extruder, the legumes at a flow rate of 0.45 to 0.91 kg per minute (1 to 2 pounds per minute), and water at a flow rate of 0.23 to 0.68 kg per minute (0.5 to 1.5 pounds per minute). The extruder includes screws for blending the ingredients and forcing the combined mass through the orifice of the extruder. The combined mass includes the grains in an amount of at least 18 wt% and the legumes in an amount of 10 to 50 wt%, based on the total weight of the combined mass. The combined mass is maintained at a temperature of less than 37.78°C (100[deg.] F) as it moves through the extruder.

The extruder operates at a die pressure of 11721087.39 to 13789514.57 Pascals (1 ,700 to 2,000 pounds per square inch), and the combined mass is cut into a plurality of non-expanded pellets immediately upon exiting the extruder. The extruder includes a blade passing across the orifice, also referred to as a die, of the extruder, typically at a speed of 300 to 320 rpm for cutting the combined mass into a plurality of pellets having a weight of 6 to 9 grams per 25 pellets. The cold-formed pellets have a moisture content of 24 to 30 wt%, preferably 26 to 28 wt%, based on the total weight of the pellets.

Next, the pellets are dried to a moisture content of 14 to 21 wt%, more preferably 17 to 19 wt%. Typically, the pellets are dried in the conventional fluidized bed type dryer maintaining a temperature less than the boiling point of water, which is 100°C (212[deg.] F), for example the conventional fluidized bed type dryer operating at a temperature of 87.78°C (190[deg.] F) for 4 minutes. The dried pellets are then added to a flaking mill, such as a conventional flaking mill used to form conventional ready-to-eat cereal flakes. The pellets are preferably at a temperature of 43.33°C to 65.56°C (110 to 150[deg.] F), more preferably 54.444°C to 60.000°C (130 to 140[deg.] F), when added to the flaking mill. The flaking mill is used to press the pellets at a temperature of 43.33°C to 65.56°C (110 to 150[deg.] F) into the cereal flakes. The flaking mill typically includes rollers operating at a speed of 550 to 650 rpm.

Finally, the cereal flakes are dried and toasted in a conventional hot air impingement type oven to a moisture content of 1 to 5 wt%, preferably 2 to 4 wt%, and a "can weight" of 538.64 g to 623,69 g (19 to 22 ounces). The finished ready-to-eat cereal flakes have a structural integrity, texture, size, shape, and overall appearance similar to conventional ready-to-eat cereal flakes. In one embodiment, the method includes applying a coating to the toasted cereal flakes. Coating processes used for conventional ready-to-eat cereals can be used.

### Example 1

An example composition for a 113kg 398.08g (250 pound) batch of the ready-to-eat cereal flakes is disclosed in Table 1. The amount of each ingredient is provided in wt% based on the total weight.

**Table 1**

| | Wt% |
|---|---|
| Precooked Dehydrated Black Beans | 16.01 |
| Whole Grain Blend | 3.31 |
| Broken Whole/Medium Grain Brown Rice | 16.36 |
| Evaporated Cane Juice Crystals | 5.76 |
| Brown Rice Syrup42DE | 2.71 |
| Hi-Grade Evaporated Salt | 0.72 |
| Cracked Hard Red Winter Wheat | 22.90 |
| Gum Acacia | 4.92 |
| Pea Protein Isolate | 7.20 |
| Water | 20.11 |

The example process first includes dry blending the whole grain blend, brown rice, red wheat, and pea protein isolate together and then cooking the dry blend in a commercial rotary steam pressure cooker. The dry blend is cooked for 60 minutes at a steam pressure of 137895.15 Pascals (20 pounds per square inch). Next, the evaporated cane juice crystals, gum acacia, and brown rice syrup are added to the pressure cooker, and cooked along with the grains and protein isolate. The mixture is cooked at a pressure of 137895.15 Pascals (20 pounds per square inch) and to a moisture content of 32 to 34 wt%, based on the total weight of the cooked mixture. The cooked mixture is then removed from the pressure cooker and cooled. The cooked mixture is dried to a moisture content of 28 to 30 wt% in a conventional fluidized bed type dryer. The cooked mixture is dried in the conventional fluidized bed type dryer operating at ambient temperature for 4 minutes.

The method next includes milling the dried mixture through a 3/8 inch mesh screen. The milled mixture is dried in the conventional fluidized bed type dryer operating at a temperature of -5.56ºC (22[deg.] F) and 432 rpm for 10 to 12 minutes and to a moisture content of 22 to 24 wt%.

The milled mixture is then combined with the precooked, dehydrated black beans, salt and additional water, and placed in a cold pellet forming extruder. The precooked, dehydrated black beans are provided in the form of particulates. The cold forming process includes adding the milled mixture at a flow rate of 3.6 kg per minute (8 pounds per minute) to the extruder, the black bean particulates at a flow rate of 0.70 kg per minute (1.54 pounds per minute), and the additional water at a flow rate of 0.41 kg per minute (0.9 pounds per minute). The extruder includes a transfer screw rotating at 9 to 10 rpm and a transfer torque of 7 to 8%, and a main screw rotating at 18 to 19 rpm and a main torque of 50 to 54%. The screws blend the milled mixture and black beans into a combined mass and force the combined mass straight through the orifice of the extruder. The combined mass is maintained at a temperature of 90 to 95[deg.] C, as it moves through the extruder.

The extruder operates at a die pressure of 11721087.39 to 13789514.57 Pascals (1 ,700 to 2,000 pounds per square inch), and the combined mass is cut into a plurality of non-expanded pellets immediately upon exiting the extruder. The extruder includes a blade passing across the die orifice of the extruder at a speed of 308 rpm for cutting the combined mass into a plurality of the pellets having a weight of 7 to 8 grams per 25 pellets. The cold-formed pellets have a moisture content of 26 to 28 wt%, based on the total weight of the pellets.

Next, the cold-formed pellets are dried in the conventional fluidized bed type dryer operating a temperature of 87.78°C (190[deg.] F) for 4 minutes. The cold- formed pellets are dried to a moisture content of 17 to 19 wt%. The finished pellets are maintained at a temperature above 87.78°C (190[deg.] F) and subsequently used for flaking.

The finished pellets are added to a flaking mill, such as a conventional flaking mill used to form conventional ready-to-eat cereal flakes. The pellets are at a temperature of 57.78°C (136[deg.] F) and a moisture content of 17 to 19 wt% when added to the flaking mill. The pellets are pressed into the cereal flakes while the pellets are at a temperature of 57.78°C (136[deg.] F). The pellets are pressed by rollers rotating at a speed of 600 rpm with no speed differential.

The cereal flakes are dried in a conventional hot air impingement type oven. The cereal flakes are toasted to a moisture content of 3 wt%. The finished ready-to- eat cereal flakes formed according to Example 1 have a can weight of 538.64 g to 623,69 g (19 to 22 ounces), a moisture content of 3 wt%, and a structural integrity, texture, size, shape, and overall appearance similar to conventional ready-to-eat cereal flakes. The ready-to-eat cereal flakes of the invention also have a bowl life similar to conventional ready-to-eat cereal flakes. The ready-to-eat cereal flakes maintain a desirable crunchiness for over two minutes when disposed in a bowl of milk.

The ready-to-eat cereal flakes can be packaged and sold as a food product, such as a ready-to-eat breakfast cereal. Alternatively, the cereal flakes can be combined with other ready-to-eat cereals or components, such as nuts, fruits, or syrups to provide a food product. The cereal flakes can also be incorporated into other food products.

## Claims

1. A method of forming a flaked ready-to-eat cereal comprising the steps of:
a.) forming a food mass by combining in a cooker grain and protein isolate and cooking said food mass in said cooker at a pressure of 137895.14 to 172368.93 Pascals (20 to 25 pounds per square inch);
b.) adding to the food mass from step a.) water and gum acacia as processing aid and cooking at 137895.14 to 172368.93 Pascals (20 to 25 psi) until a moisture content of the food mass is from 30 to 36 weight percent, wherein the gum acacia is present in an amount of at least 3 wt%;
c.) removing the cooked food mass from cooker and then cooling the cooked food mass and drying it to a moisture content of from 24 to 33 weight percent;
d.) milling the cooked food mass through a screen having openings of from 0.32 to 1.59 cm (1/8 to 5/8 of an inch) in diameter and then further drying the milled food mass to a moisture content of from 20 to 26 weight percent;
e.) combining the milled food mass with legumes and further water in a cold pellet former to form a combined mass and cold forming said combined mass into non-expanded pellets while maintaining said combined mass at a temperature of 37.78° C (100[deg.] F) or less;
f.) drying the pellets to a moisture content of from 14 to 21 weight percent and then flaking them at a temperature of from 43.33°C to 65.56°C (110 to 150[deg.] F); and
g.) drying and toasting the flakes to a final moisture content of from 1 to 5 weight percent.

2. The method as recited in claim 1 wherein step a.) comprises providing the grain in an amount of from 18 to 66 weight percent and the protein isolate in an amount of 6 to 13 weight percent based on the total weight of the flakes.

3. The method as recited in claim 1 wherein step b.) comprises providing as said processing aid gum acacia present in an amount of from 3 to 9 weight percent based on the total weight of the flakes.

4. The method as recited in claim 1 wherein step e.) comprises providing the legumes in an amount of from 10 to 50 weight percent based on the total weight of the flakes.

5. The method as recited in claim 1, wherein said flakes after formation have a can weight of 538.64 - 623.69 grams (19 to 22 ounces), measured as the weight of said flakes filling a container of 3.79 litres (231 cubic inch volume) without compressing the flakes before weighing.

## Patentansprüche

1. Verfahren zur Bildung von essfertigen Getreideflocken, das folgende Schritte umfasst:
a) Bildung einer Lebensmittelmasse durch Kombination von Körnern und Proteinisolat in einem Kocher und Kochen dieser Lebensmittelmasse im Kocher bei einem Druck von 137895,14 bis 172368,93 Pascal;
b) Zugabe von Wasser und Gummi arabicum als Verarbeitungshilfe zur Lebensmittelmasse aus Schritt a) und Kochen bei 137895,14 bis 172368,93 Pascal, bis ein Feuchtigkeitsgehalt der Lebensmittelmasse von 30 bis 36 Gewichtsprozent erreicht ist, wobei das Gummi arabicum in einer Menge von mindestens 3 Gew.-% vorliegt;
c) Entnahme der gekochten Lebensmittelmasse aus dem Kocher und anschließendes Abkühlen der gekochten Lebensmittelmasse und Trocknen derselben bis zu einem Feuchtigkeitsgehalt von 24 bis 33 Gewichtsprozent;
d) Mahlen der gekochten Lebensmittelmasse über ein Sieb, das Öffnungen mit einem Durchmesser von 0,32 bis 1,59 cm aufweist, und weiteres Trocknen der gemahlenen Lebensmittelmasse bis zu einem Feuchtigkeitsgehalt von 20 bis 26 Gewichtsprozent;
e) Kombinieren der gemahlenen Lebensmittelmasse mit Hülsenfrüchten und weiterem Wasser in einem Kalt-Pellet-Bildner, um eine kombinierte Masse zu bilden, und Kaltformen dieser kombinierten Masse zu nicht expandierten Pellets, wobei die kombinierte Masse bei einer Temperatur von 37,78°C oder weniger gehalten wird;
f) Trocknen der Pellets bis zu einem Feuchtigkeitsgehalt von 14 bis 21 Gewichtsprozent und anschließendes Flockieren bei einer Temperatur von 43,33°C bis 65,56°C; und
g) Trocknen und Toasten der Flocken bis zu einem Feuchtigkeitsendgehalt von 1 bis 5 Gewichtsprozent.

2. Verfahren nach Anspruch 1, wobei der Schritt a) das Bereitstellen der Körner in einer Menge von 18 bis 66 Gewichtsprozent und des Proteinisolats in einer Menge von 6 bis 13 Gewichtsprozent, bezogen auf das Gesamtgewicht der Flocken, umfasst.

3. Verfahren nach Anspruch 1, wobei der Schritt b) das Bereitstellen von Gummi arabicum als Verarbeitungshilfe, das in einer Menge von 3 bis 9 Gewichtsprozent, bezogen auf das Gesamtgewicht der Flocken, vorliegt, umfasst.

4. Verfahren nach Anspruch 1, wobei der Schritt e) das Bereitstellen der Hülsenfrüchte in einer Menge von 10 bis 50 Gewichtsprozent, bezogen auf das Gesamtgewicht der Flocken, umfasst.

5. Verfahren nach Anspruch 1, wobei die Flocken nach ihrer Bildung ein Dosengewicht von 538,64 bis 623,69 Gramm aufweisen, gemessen als das Gewicht der Flocken, die vor dem Wiegen ohne Verdichtung der Flocken einen Behälter von 3,79 Litern ausfüllen.

## Revendications

1. Procédé de formation de flocons de céréale prêts à être consommés comprenant les étapes consistant à :
a.) former une masse d'aliments en mélangeant dans un cuiseur céréales et isolat protéique et faire cuire ladite masse d'aliments dans ledit cuiseur à une pression de 137895,14 à 172368,93 pascals (20 à 25 livres par pouce carré) ;
b.) ajouter à la masse d'aliments de l'étape a.) de l'eau et de la gomme acacia en guise d'adjuvant de fabrication et faire cuire à une pression de 137895,14 à 172368,93 pascals (20 à 25 livres par pouce carré) jusqu'à ce que la teneur en humidité de la masse d'aliments soit de 30 à 36% en poids, où la gomme acacia est présente à hauteur de 3% en poids, au moins ;
c.) retirer la masse d'aliments cuits du cuiseur puis refroidir la masse d'aliments cuits et la sécher jusqu'à ce que sa teneur en humidité soit de 24 à 33 pourcent en poids ;
d.) broyer la masse d'aliments cuits à travers un crible présentant des ouvertures d'un diamètre de 0,32 à 1,59 cm (1/8 à 5/8 de pouce) puis sécher de nouveau la masse d'aliments broyés jusqu'à ce que sa teneur en humidité soit de 20 à 26 pourcent en poids ;
e.) mélanger la masse d'aliments broyés avec des légumineuses et davantage d'eau dans un moule à granulés à froid pour former une masse mélangée et par moulage à froid transformer ladite masse mélangée en granulés non expansés tout en maintenant ladite masse mélangée à une température de 37,78°C (100°F) ou inférieure ;
f.) sécher les granulés jusqu'à ce que leur teneur en humidité soit de 14 à 21 pourcent en poids puis les transformer en flocons à une température de 43,33°C à 65,56°C (110 à 150°F) ; et
g.) sécher et faire griller les flocons jusqu'à ce que leur teneur en humidité finale soit de 1 à 5 pourcent en poids.

2. Le procédé tel qu'exposé dans la revendication 1, où l'étape a.) comprend l'apport d'une quantité de céréales allant de 18 à 66 pourcent en poids et d'une quantité d'isolat protéique de 6 à 13 pourcent en poids sur la base du poids total des flocons.

3. Le procédé tel qu'exposé dans la revendication 1, où l'étape b.) comprend l'apport de ladite gomme acacia en guise d'adjuvant de fabrication à hauteur de 3 à 9 pourcent en poids sur la base du poids total des flocons.

4. Le procédé tel qu'exposé dans la revendication 1, où l'étape e.) comprend l'apport des légumineuses à hauteur de 10 à 50 pourcent en poids sur la base du poids total des flocons.

5. Le procédé tel qu'exposé dans la revendication 1, où le poids d'une boîte desdits flocons après leur formation est de 538,64 - 623,69 grammes (19 à 22 onces), mesuré en tant que poids desdits flocons remplissant un conteneur de 3,79 litres (volume de 231 pouces cube) sans que les flocons aient été comprimés avant la pesée.
